# EUROPÄISCHE PATENTSCHRIFT

(11) **EP 1 078 344 B1**
(45) Veröffentlichungstag und Bekanntmachung des Hinweises auf die Patenterteilung: **14.01.2004**
(21) Anmeldenummer: 99926240.5
(22) Anmeldetag: 14.04.1999
(51) Int. Cl.: G08G 1/00

(54) **BELEUCHTUNGSANLAGE, Z.B. FLUGHAFEN- ODER STRASSENBEFEUERUNGSANLAGE**
LIGHTING INSTALLATION, FOR INSTANCE, AIRPORT OR ROAD NAVIGATION LIGHTS, OBSTACLE WARNING LIGHTS, ADVISORY, WARNING AND SIGNAL LIGHTS OR THE LIKE
SYSTEME D'ECLAIRAGE, PAR EXEMPLE SYSTEME DE BALISAGE D'AEROPORTS ET DE ROUTES, SIGNAUX LUMINEUX AVERTISSEURS D'OBSTACLES, FEUX INDICATEURS, TEMOINS LUMINEUX OU SIMILAIRES

(30) Priorität: 21.04.1998 DE 19817782
(43) Veröffentlichungstag der Anmeldung: 28.02.2001
(73) Patentinhaber: SIEMENS AKTIENGESELLSCHAFT, 80333 München (DE)
(72) Erfinder: BELGER, Lothar, B-3078 Everberg (BE); SCHMIDT, Helmut, D-91341 Röttenbach (DE)
(86) Internationale Anmeldenummer: PCT/DE1999/001117
(87) Internationale Veröffentlichungsnummer: WO 1999/054854

(56) Entgegenhaltungen:
- EP-A- 0 558 349
- EP-A- 0 723 384
- EP-A- 0 753 986
- DE-A- 4 232 618

## Beschreibung

Beleuchtungsanlage, z.B. Flughafen- oder Straßenbefeuerungsanlage, Hinderniswarnleuchte, Hinweis-, Warn- und Signalleuchte od.dgl.

Die Erfindung bezieht sich auf eine Beleuchtungsanlage nach dem Oberbegriff des Patentanspruchs 1.

Eine derartige Beleuchtungsanlage, die beispielsweise als Flughafen- oder Straßenbefeuerungsanlage, als Hinderniswarnleuchte, als Hinweis-, Warn- und Signalleuchte od.dgl. eingesetzt werden kann, ist beispielhaft aus der DE-A-42 32 618 und der WO 90/04242 A bekannt. Zu dieser Beleuchtungsanlage gehört eine Einrichtung zur Überwachung, Steuerung und Regelung ihrer Lichtquellen oder Gruppen von Lichtquellen, wobei diese Lichtquellen als Unterflurfeuer ausgebildet sein können. Jede dieser Lichtquellen hat zumindest eine Leuchtmitteleinheit; dieser Leuchtmitteleinheit ist eine Sender/Empfängereinrichtung mit einem Mikrocontroller zugeordnet, die ihrerseits über die Energieversorgungsleitung der Beleuchtungsanlage an eine Zentrale angeschlossen ist, wobei der Mikrocontroller der jeweiligen Sender/Empfängereinrichtung von der Zentrale selektiv angesteuert werden kann. Hierzu hat die Zentrale ein Sende/Empfangsteil und einen Steuerrechner. Der Mikrocontroller jeder Leuchtmitteleinheit bildet einen Bestandteil einer dezentralen Steuereinrichtung, zu der applikationsspezifische Komponenten, z.B. Schalt-, Überwachungs- und Einstellelemente, gehören. Im Falle der aus der WO 90/04242 A bekannten Beleuchtungsanlage ist darüber hinaus jede Sender/Empfängereinrichtung als Modulteil ausgebildet, das dem Mikrocontroller und dem Leuchtmittel des Unterflurfeuers vorgeschaltete Schalt- und Überwachungskomponenten aufweist.

Eine ähnliche Beleuchtungsanlage ist aus der EP-A-0 723 384 bekannt. Diese Beleuchtungsanlage ist als Sicherheitsbeleuchtungsanlage ausgestaltet, wobei die einzelnen Lichtquellen der Beleuchtungsanlage bei Ausfall der Stromversorgung mittels Batteriestrom mit elektrischer Energie versorgt werden. Hierzu ist jeder der Lichtquellen bzw. Gruppen von Lichtquellen eine Umschalteinrichtung zugeordnet, mittels der - bei Ausfall der Stromversorgung - eine Umschaltung auf Batteriebetrieb möglich ist. Bei dieser bekannten Sicherheitsbeleuchtungsanlage bilden unter anderem die Umschalteinrichtungen der Lichtquellen bzw. der Gruppen von Lichtquellen Bestandteile einer dezentralen Steuereinrichtung, wobei zu der Steuereinrichtung Ein- und Ausschalt- sowie Überwachungselemente gehören.

Aus der EP-A-0 900 882 ist eine Beleuchtungsanlage bekannt, die aus Unterflurleuchten besteht und der Verkehrslenkung dienen soll. Als Beleuchtungsmittel dieser bekannten Unterflurleuchten werden Leuchtdioden eingesetzt. Jede einzelne Leuchtdiode ist mittels Anschlussleitern an eine entfernt von den Leuchtdioden angeordnete Leiterplatte angeschlossen. Des weiteren sind Ansteuerungsbauelemente in den Unterflurfeuern vorgesehen, mittels denen die Leuchtdioden angesteuert werden können.

Aus der US-A- 4 924 364 ist ein Unterflurfeuer bzw. eine Unterflurleuchte für Flughäfen bekannt, bei der eine Leuchtmitteleinheit in Form einer elektrischen Lampe gemeinsam mit der optischen Einrichtung der Unterflurleuchte bzw. des Unterflurfeuers von den übrigen Bestandteilen der- bzw. desselben trennbar ist. Hierbei wird ein die elektrische Lampe enthaltender Optikblock in Vertikalrichtung aus der Unterflurleuchte bzw. dem Unterflurfeuer entfernt.

Der vorliegenden Erfindung liegt die Aufgabe zugrunde, eine Beleuchtungsanlage, wie sie aus der vorstehend in bezug genommenen WO 90/04242 A bekannt ist, derart weiterzubilden, dass eine kompaktere Ausgestaltung der Unterflurfeuer bzw. Lichtquellen ermöglicht ist.

Diese Aufgabe wird erfindungsgemäß durch die Merkmale im kennzeichnenden Teil des Patentanspruchs 1 gelöst. Durch die erfindungsgemäße Ausgestaltung der Platine und Anordnung des Modulteils im Niveau der Leuchtmitteleinheit ist eine im Vergleich zum Stand der Technik flachere Ausgestaltung der Unterflurfeuer bzw. Lichtquellen möglich.

Erfindungsgemäße Beleuchtungsanlagen können günstig auf Kleinflughäfen, Heliports, mobilen Flughafenausrüstungen, Feldflughäfen, Landeplätzen ud.dgl. eingesetzt werden. Darüber hinaus ist der Einsatz erfindungsgemäßer Beleuchtungsanlagen auch bei Straßenbefeuerungsanlagen zweckmäßig durchführbar, beispielsweise zur zeitweiligen Änderung von Fahrspurverläufen ud.dgl.

Wenn die Leuchtmitteleinheiten der erfindungsgemäßen Beleuchtungsanlage jeweils aus einer Anzahl bzw. einem Cluster von lichtabstrahlenden Dioden (LED) ausgebildet sind, ist es möglich, die Versorgungsenergie der einzelnen Leuchtmitteleinheiten zu reduzieren; die Lebensdauer derartig ausgebildeter Leuchtmitteleinheiten ist erheblich erhöht, so dass Wartungsund Instandhaltungsintervalle der Beleuchtungsanlage deutlich erhöht werden, wodurch sich ein erheblich reduzierter Wartungs- und Instandhaltungsaufwand ergibt. Durch den niedrigeren Energie- und Wartungs- sowie Instandhaltungsaufwand lassen sich die erfindungsgemäßen Beleuchtungsanlagen wirtschaftlich erheblich günstiger betreiben als herkömmliche derartige Beleuchtungsanlagen. Alternativ zur Ausgestaltung der Leuchtmitteleinheiten mittels lichtabstrahlender Dioden (LED) können die Leuchtmitteleinheiten auch als lichtabstrahlende Polymere ausgebildet werden, wobei sich gleichgelagerte Vorteile ergeben.

Zur weiteren Reduzierung des technologischen Aufwands für die Steuerung, Regelung und Überwachung erfindungsgemäßer Beleuchtungsanlagen ist es vorteilhaft, wenn die dezentralen Steuereinrichtungen der Beleuchtungsanlage als LON (Local Operating Network) ausgebildet sind.

Bei einer bevorzugten Ausführungsform der Erfindung ist der Mikrocontroller als One-Chip-Controller ausgebildet, was zu erheblichen Einsparungen hinsichtlich des technisch-konstruktiven sowie des wirtschaftlichen Aufwands führt.

Der Mikrocontroller weist vorteilhafterweise einen EEPROM, einen RAM, drei CPU, einen Clocking- und Control-Block mit Clock/Timer-Elementen, einen Applikations-Input/Output-Block und einen Kommunikationsport auf, wobei der EEPROM, der RAM, die drei CPU, der Applikations-Input/Output-Block und der Kommunikationsport mittels eines internen Adressbusses und eines internen Datenbusses und der EEPROM, der RAM, die drei CPU, der Applikations-Input/Output-Block, der Kommunikationsport und der Clocking- und Control-Block mittels einer Timing- und Steuerleitung miteinander verbunden sind.

Zweckmäßigerweise hat der EEPROM des Mikrocontrollers 512 Bytes, wobei in ihm Netzwerkparameter und Applikationsprogramme abspeicherbar sind.

Die drei CPU des Mikrocontrollers sollen vorteilhaft jeweils als 8-Bit-CPU ausgebildet sein.

Hierdurch ist es möglich, eine der drei CPU des Mikrocontrollers für Applikationsprogramme einzusetzen.

Die beiden anderen CPU des Mikrocontrollers können zur LONTALK-Protokollverarbeitung eingesetzt werden, wobei die verarbeitbaren Protokolle alle sieben Schichten des Referenzmodells nach ISO/OSI aufweisen.

Der Applikations-Input/Output-Block ist vorteilhafterweise als Parallelinterface zu einem externen Mikroprozessor mit acht Daten- und drei Steuerleitungen einsetzbar.

Gemäß einer Ausführungsform der Erfindung hat der Applikations-Input/Output-Block des Mikrocontrollers ein 16-Bit-Laderegister, eine Zähleinrichtung, einen Zwischenspeicher (Latch), eine Taktquelle (Clock Source), vier 20 mA-Sink Current-Stifte, vier programmierbare Pull-ups und ggf. weitere Elemente.

Der Kommunikationsport des Mikrocontrollers hat vorteilhafterweise fünf Netzwerkinterfacestifte, mittels denen er an ein Grundbandmedium, z.B. an eine verdrillte Zweiaderleitung, oder an einen externen Transceiver angeschlossen werden kann.

Der Mikrocontroller kann einen Niedrigspannungsdetektor und - resetkreis aufweisen, mittels dem ein fehlerhafter Betrieb oder Störungen des EEPROM verhindert werden können, falls die angelegte Spannung kleiner als 4,1 VDL +/- 300mV Toleranz ist.

Sofern der Mikrocontroller keinen ROM aufweist, ist es zweckmäßig, wenn er ein externes Speicherinterface hat. Der RAM des Mikrocontrollers kann dann vorteilhaft 2048 Bytes aufweisen.

Gemäß einer weiteren Ausführungsform der Erfindung hat der Mikrocontroller einen RAM mit 1024 oder 2048 Bytes und einen ROM mit 10240 Bytes.

Jeder Mikrocontroller hat eine eindeutige, unverlierbar abgelegte Identifikationsnummer, mittels der der jeweilige Leuchtmittelfunktionszustand mit einer Adresse verknüpfbar ist, die vorzugsweise 48 Bit hat und für die 6 Bytes des EEROM einsetzbar sind.

Zweckmäßigerweise sollte der Mikrocontroller einen Servicestift aufweisen, so dass eine wirksame Netzwerkeinrichtung möglich ist.

Jedes Unterflurfeuer sollte eine Leuchtintensitäts-Regelschaltung aufweisen, die einen vorgegebenen Leuchtmittelstrom-Sollwert über ein Pulsweitenmodulationselement einstellt und den sich einstellenden Istwert nachregelt.

Vorteilhafterweise ist diese Leuchtintensitäts-Regelschaltung zur Lastabhängigkeits- und Leitungslängenkompensation der Abfallspannung oder des Spannungsabfalls ausgebildet.

Vorteilhafterweise ist ein Schaltnetzteil vorgesehen, das als Trennelement einen Ringkernübertrager aufweist, der im Zusammenwirken mit dem Pulsweitenmodulationselement die übertragene Leistung bestimmt.

Des weiteren ist zweckmäßigerweise jedes Unterflurfeuer mit einer Trennschaltung versehen, die bei unzulässigen Strömen eine schnelle Trennung zwischen der Sender/Empfängereinrichtung und der Energieversorgungsleitung herbeiführt und nach Störungsbehebung, z.B. durch Leuchtmittelaustausch, diese Trennung aufhebt.

Es ist eine Messschaltung vorgesehen, über die eine Trennung und eine Wiederanschaltung vom Mikrocontroller erfassbar ist.

Vorteilhafterweise sind mittels der Messschaltung alle Leuchtmittelfunktionen erfassbar und in den Mikrocontroller eingebbar, wo die Leuchtmittelistwerte mit den Leuchtmittelsollwerten vergleichbar sind.

Sofern lichtabstrahlende Dioden (LED) für die Unterflurfeuer eingesetzt werden, ist es zweckmäßig, wenn jedes Unterflurfeuer eine Versorgungsschaltung aufweist, mittels der der Leuchtmittelstrom an die Versorgungsspannung anpaßbar ist.

Vorteilhafterweise sollte jedes Unterflurfeuer eine Stellerschaltung aufweisen, mittels der ein Signal generierbar ist, mittels dem der Istfunktionszustand des Leuchtmittels, z.B. ein Leuchtmitteldefekt, Leitungsbruch oder Kurzschluss, über die Energieversorgungsleitung an die Zentrale rückmeldbar ist.

Jedes Unterflurfeuer sollte des Weiteren mit einer weiteren Versorgungsschaltung für den Mikrocontroller versehen sein, mittels der gewährleistet ist, dass bei Fehlern im Leuchtmittelkreis eine differenzierte Meldung an das LON abgesetzt werden kann.

Bei einer vorteilhaften Ausführungsform der Erfindung sind mittels des Mikrocontrollers Funktionsdaten über den Zustand der einzelner Schaltungen der jeweiligen Sender/Empfängereinrichtung an die Zentrale meldbar, was zu beträchtlichen Einsparungen bei Wartung und Reparatur führt.

Zur weiteren Erleichterung der Wartung und der Reparatur ist es vorteilhaft, wenn die einzelnen Unterflurfeuer über eine lösbare Verbindung, insbesondere über eine vorzugsweise als Schukosteckverbindung ausgebildete druckwassergeschützte erste Steckverbindung an einem Kabel mit der Energieversorgungsleitung verbunden sind.

Die Leuchtmitteleinheit des Unterflurfeuers kann eine interne zweite Steckverbindung aufweisen, die vorzugsweise als zweipolige FAA-Steckverbindung ausgebildet ist, und mittels der sie an ihr vorgeschaltete Elemente des Unterflurfeuers angeschlossen ist.

Die einzelnen Unterflurfeuer sind zweckmäßigerweise aus ihrem Sitz im Untergrund heraushebbar und mittels der ersten Steckverbindung von der Hauptenergieversorgungsleitung trennbar.

Die Zugehörigkeit einzelner Unterflurfeuer zu vorgebbaren Unterflurfeuergruppen oder Unterflurfeuerketten, wobei die jeweilige Zugehörigkeit über die Energieversorgungsleitung konfigurierbar ist, sichert eine große Variabilität und Anpassungsfähigkeit der Flughafen- oder Straßenbefeuerungsanlage an unterschiedliche Anforderungen.

Die Kommunikation auf der Energieversorgungsleitung sollte im C-Band nach CENELEC durchführbar sein, so dass den in Europa geltenden Normen entsprochen werden kann.

Die Unterflurfeuer sind in vorteilhafter Weise parallel an der Energieversorgungsleitung angeschaltet.

Zur Vereinfachung des Aufbaus der Unterflurfeuer sind der Mikrocontroller sowie die weiteren dem Leuchtmittel vorgeschalteten Schalt- und Überwachungskomponenten jedes Unterflurfeuers auf einer Platine angeordnet, die an die Form eines Gehäuses des Unterflurfeuers angepasst und stoß- und rüttelfest im Unterflurfeuer befestigt ist.

Hierzu ist es vorteilhaft, wenn das Modulteil jedes Unterflurfeuers mittels der vorzugsweise druckwassergeschützte erste Steckverbindung ausgebildeten lösbaren an die Energieversorgungsleitung und mittels der internen Steckverbindung an das Leuchtmittel des Unterflurfeuers anschließbar ist.

Um Störungen hinsichtlich des empfangenen Signals zu unterdrücken, ist es zweckmäßig, wenn das Modulteil jedes Unterflurfeuers ein metallisches geerdetes Gehäuse aufweist.

Um zu verhindern, dass Feuchtigkeit in das Modulteil eindringt und zu Störungen des Unterflurfeuers führt, ist es vorteilhaft, wenn das Modulteil wasserdicht, beispielsweise in Kunststoff, eingegossen ist, wobei dann für die beiden Steckverbindungen jeweils ein Kabelschwanz vorgesehen ist.

Die erfindungsgemäße Beleuchtungsanlage lässt einen nahezu potentialfreien Betrieb der Unterflurfeuer mit minimalem Energieverbrauch zu, wobei im Standby-Betrieb ein nochmals verringerter Energieverbrauch auftritt.

Im folgenden wird die Erfindung an Hand von Ausführungsformen unter Bezugnahme auf die Zeichnung näher erläutert. Es zeigen:
- FIG 1: eine prinzipielle Darstellung einer Einrichtung zur Überwachung, Steuerung und Regelung einer erfindungsgemäßen Beleuchtungsanlage;
- FIG 2: ein Blockschaltbild eines Modulteils sowie eines Leuchtmittels eines Unterflurfeuers;
- FIG 3: die räumliche Anordnung von Unterflurfeuern, wobei mehrfach zugeordnete Unterflurfeuer vorgesehen sind;
- FIG 4: einen Mikrocontroller eines Unterflurfeuers der erfindungsgemäßen Beleuchtungsanlage;
- FIG 5: eine Prinzipdarstellung des Unterflurfeuers sowie dessen Anschlusses an die Energieversorgungsleitung;
- FIG 6: eine Draufsicht auf ein Modulteil der erfindungsgemäßen Beleuchtungsanlage;
- FIG 7: eine Unteransicht des in FIG 6 dargestellten Modulteils;
- FIG 8: eine Draufsicht auf eine Ausführungsform eines Unterflurfeuers der erfindungsgemäßen Beleuchtungsanlage;
- FIG 9: eine Draufsicht auf eine zweite Ausführungsform des Unterflurfeuers der erfindungsgemäßen Beleuchtungsanlage; und
- FIG 10: eine Draufsicht auf eine dritte Ausführungsform des Unterflurfeuers der erfindungsgemäßen Beleuchtungsanlage.
- FIG 11: eine Schnittdarstellung eines Unterflurfeuers der erfindungsgemäßen Beleuchtungsanlage; und
- FIG 12: eine Schnittdarstellung einer weiteren Ausführunasform eines Unterflurfeuers der erfindungsgemäßen Beleuchtungsanlage.

Im folgenden wird die erfindungsgemäße Beleuchtungsanlage beispielhaft als Flughafenbefeuerungsanlage beschrieben. Grundsätzlich ist es jedoch auch möglich, die erfindungsgemäße Beleuchtungsanlage als Straßenbefeuerungsanlage, Hinderniswarnleuchte, Hinweis-, Warn- und Signalleuchte od.dgl. auszugestalten, wobei zu der Beleuchtungsanlage eine Vielzahl von Lichtquellen oder eine Vielzahl von Lichtquellengruppen gehören kann.

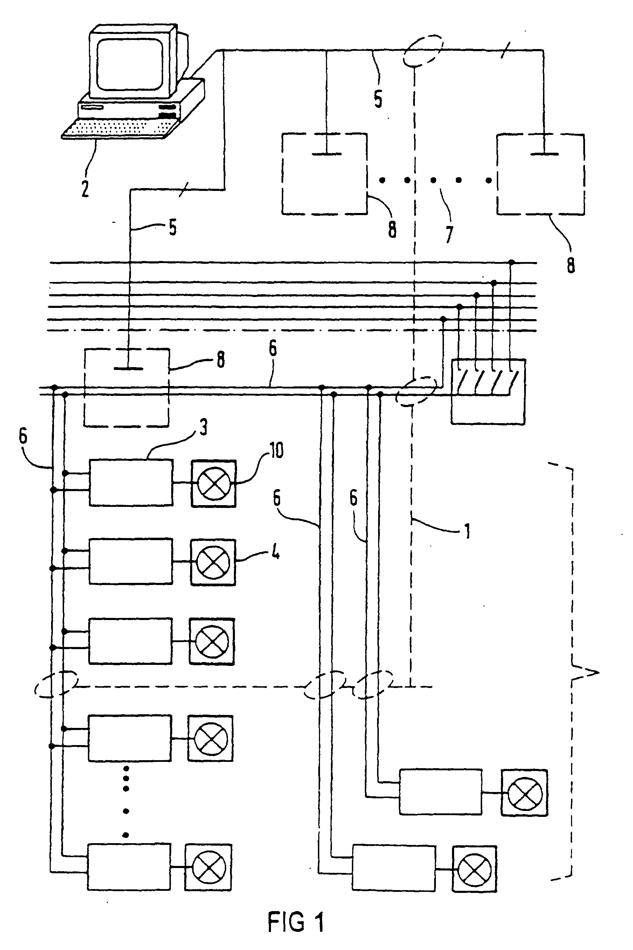

Die erfindungsgemäße Beleuchtungsanlage in der dargestellten Ausführungsform weist eine Einrichtung zur Überwachung, Steuerung und Regelung von Unterflurfeuern auf, wie sie prinzipiell in FIG 1 dargestellt ist.

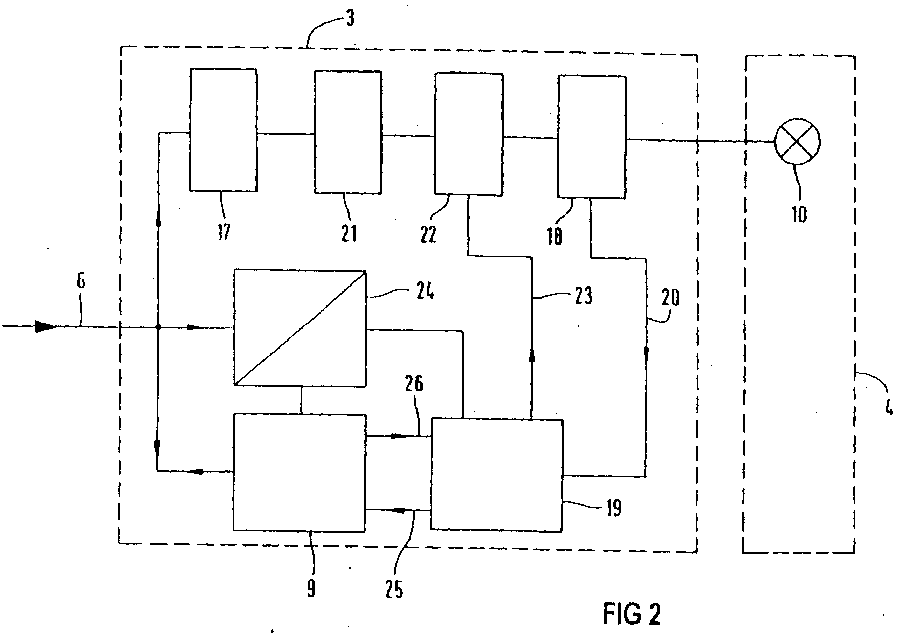

Die dort gezeigte Einrichtung gliedert sich auf in eine Datenkommunikation innerhalb eines LON (Local Operating Network) 1, in die Steuerung und Überwachung mittels einer im dargestellten Ausführungsbeispiel als PC 2 ausgebildeten Zentrale und die Funktion eines in FIG 2 im einzelnen dargestellten Modulteils 3, von denen jedes Unterflurfeuer 4 eines aufweist.

Die Datenkommunikation zwischen dem Modulteil 3 des Unterflurfeuers 4 und dem die Zentrale bildenden PC 2 wird im LON realisiert.

Alle sieben ISO/OSI-Protokollschichten werden erfüllt, da sie in den in der Einrichtung zur Überwachung, Steuerung und Regelung von Unterflurfeuern eingesetzten Mikroprozessoren hard- und softwaremäßig implementiert sind.

Es ist möglich, verschiedene miteinander kombinier- und mischbare Kommunikationsmedien zu wählen, wobei beispielsweise Lichtwellenleiter, verdrillte Zweidrahtleitungen (TWP) 5, das Energieversorgungsnetz 6 und Funkstrecken 7 als Kommunikationsmedien einsetzbar sind.

Dem Übertragungsverfahren liegt ein differentieller Manchester-Code mit einer Bit-Synchronisation, die an das jeweilige Kommunikationsmedium anpaßbar ist, zugrunde. Ein CSMA-Verfahren mit Zugriffsprioritäten realisiert die Kollisionsvermeidung. Für wichtige Meldungen können Prioritäten vergeben werden.

Der Übergang zwischen den unterschiedlichen eingesetzten Kommunikationsmedien wird mittels Routern 8 realisiert.

Während die Datenkommunikation innerhalb von Betriebsgebäuden bevorzugt über verdrillte Zweidrahtleitungen 5 erfolgt, da dort eine hohe Übertragungsrate benötigt wird, sind im Bereich der Niederspannungshauptverteilungen Router 8 installiert, mittels denen Datenprotokolle in ein oder mehrere Versorgungsnetze 6 einkoppelbar sind. Somit kann bei räumlich weitläufig angeordneten Niederspannungsnetzen mit evtl. zwischengeschalteten Mittelspannungstransformatoren eine sternförmige Einspeisung in die Verteilerebene erfolgen.

Im Modulteil 3 des Unterflurfeuers 4 vorgesehene, in FIG 2 dargestellte Übertrager 9 zur Energieversorgungsleitung 6 sowie die Router 8 über die verdrillten Zweidrahtleitungen 5 zum LON 1 arbeiten im für Europa zugelassenen C-Band nach CENELEC.

Der die Zentrale bildende PC 2 übernimmt die zentrale Konfiguration, Steuerung und Überwachung der unter Umständen mehrere Leuchtmittel 10 aufweisenden Leuchten der Unterflurfeuer 4 über die Modulteile 3 derselben. Es ist möglich, mehrere PC 2 ohne Hierarchie an verschiedenen Orten in das LON zu integrieren, die dann redundant arbeiten und sich gegenseitig überwachen können.

Ein Fernzugriff über Modemverbindungen oder ISDN ist möglich.

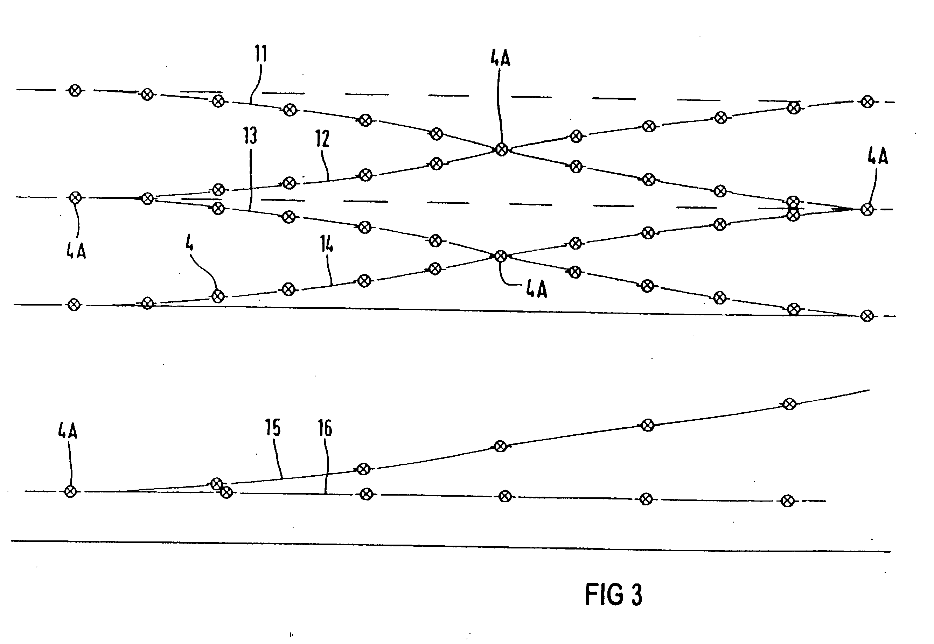

Nach der wahllosen Installation der Modulteile 3 wird mit dem PC 2 jedes Modulteil 3 bezüglich seiner Zugehörigkeit zu in FIG 3 dargestellten Unterflurfeuerketten 11, 12, 13, 14, 15, 16 konfiguriert. Die entsprechenden Daten werden in die jeweiligen Modulteile 3 der Unterflurfeuer 4 geladen, wo sie unverlierbar gespeichert werden. Aufgrund der einander überschneidenden Unterflurfeuerketten 11, 12, 13, 14 sind Unterflurfeuer 4A vorgesehen, die unterschiedlichen Unterflurfeuerketten sowie Unterflurfeuerkettengruppen zugehörig sind.

Eine grafische Oberfläche auf dem PC 2 übernimmt die Darstellung der Modulteile 3, wobei verschiedene Farben der Symbole der Modulteile 3 die unterschiedlichen Betriebs- und Fehlerzustände der Modulteile 3 mit ihren angeschlossenen Leuchtmitteln 10 signalisieren.

Eine Historienfunktion ermöglicht die Erfassung der Einschaltdauer aller Modulteile 3 und der ihnen zugeordneten Leuchtmittel 10 und gibt automatisch Wartungshinweise zum Austausch von Leuchtmitteln 10. Hierbei wird die Leuchtmittelarbeit zugrundegelegt, da sich bei Betrieb unterhalb der Nenndaten eine Lebensdauerverlängerung ergibt. Alle Historien- und Wartungsdaten werden in einer aus dem System der Einrichtung ausgebbaren Datei abgelegt. Betriebszeiten, Störund Auswahlmeldungen der Modulteile 3 lassen sich mit einem PC 2 frei in Gruppen und nach Prioritäten geordnet zusammenfassen; diese können über Datenverkehr mit anderen Leitwartenrechnern weiterverarbeitet und den Wartungsbetrieben automatisch zugeleitet werden.

Mit einem PC 2 kann von jedem Modulteil 3 das Montagedatum des jeweiligen Leuchtmittels 10 und die aufgelaufene Gesamtbetriebszeit nach der Arbeitshistorie ermittelt werden.

Zum Austausch von defekten Modulteilen 3 steht eine "Service-Terminal"-Funktion zur Verfügung, mit der dem neuen Modulteil 3 von einem PC 2 die Daten des defekten Modulteils 3 zugewiesen werden, so dass die Arbeit innerhalb der Flughafenbefeuerungsanlage sich ausschließlich auf das Wechseln des Modulteils 3 beschränkt.

Alle Modulteile 3 lassen sich durch den PC 2 zu Testzwecken mit variablen Beleuchtungsstärken einzeln ansteuern.

Ein Leitrechner kann über einen PC 2 frei programmierbare Szenarien bezüglich der Ansteuerung der Unterflurfeuerketten 11, 12, 13, 14, 15, 16 abrufen; der PC 2 kann jedoch gleichzeitig als Leitrechner fungieren. Die Rechnerkopplung zu Fremdsystemen wird beispielsweise durch eine RS 232-Schnittstelle realisiert.

Das in FIG 2 in seinem Blockschaltbild dargestellte Modulteil 3 dient zur Steuerung und Überwachung jeweils eines Leuchtmittels 10 eines Unterflurfeuers 4.

Im Serienkreis mit dem Leuchtmittel 10 ist eine Trennschaltung 17 vorgesehen, die bei unzulässigen Strömen eine schnelle Trennung des ihr nachgeordneten Leuchtmittelkreisteils und der ihr ebenfalls nachgeordneten Leuchtmittel 10 des Unterflurfeuers 4 sicherstellt. Die Trennschaltung 17 schaltet nach einer Störungsbehebung, z.B. mittels eines Leuchtmittelaustausches, den Leuchtmittelkreis wieder zu.

Die Abtrennung des der Trennschaltung 17 nachgeordneten Leuchtmittelkreises wird über eine Messschaltung 18 von einem Mikrocontroller 19 erfasst, da eine unzulässige Abweichung des Istwertes vom Sollwert über eine Verbindungsleitung 20 im Mikrocontroller 19 vorliegt. Mittels des Übertragers 9 steht diese unzulässige Abweichung in der Energieversorgungsleitung 6 bzw. im LON 1 zur Verfügung. Die gleiche Funktion gilt für die Rückkehr des Leuchtmittelkreises aus der Störung, z.B. nach Beendigung des Leuchtmittelaustausches.

Eine Versorgungsschaltung 21 passt die Leuchtmittelspannung beim Einsatz von lichtabstrahlenden Dioden (LED) an die Versorgungsspannung an. In einem derartigen Leuchtmittelkreis kann dann eine Potentialtrennung vorgesehen sein.

Eine Stellerschaltung 22 ermöglicht eine Einflussnahme auf das Niveau des durch den Ausgang fließenden Stromes bei Abschluss des Leuchtmittelkreises durch das Leuchtmittel 10. Die Stellerschaltung 22 erhält ihre Stellgröße über eine Verbindungsleitung 23 vom Mikrocontroller 19, in dem ein ständiger Vergleich des anstehenden Sollwertes mit dem Leuchtmittelstromistwert durchgeführt wird. Bei dieser Vorgehensweise wird nicht nur der rückgeführte Leuchtmittelstromistwert kontrolliert, sondern auch der wahre Funktionszustand des Leuchtmittels 10 wird über den Übertrager 9 in die Energieversorgungsleitung 6 bzw. das LON 1 gemeldet.

Der Mikrocontroller 19 enthält die unverlierbar abgelegte Netzwerkadresse des Modulteils 3; der Leuchtmittelfunktionszustand wird dort mit dieser versehen, so dass eine Identifikation in dem die Zentrale bildenden PC 2 ermöglicht ist.

Eine von dem durch die Trennschaltung 17, die Versorgungsschaltung 21, die Stellerschaltung 22 und die Messschaltung 18 gebildeten Leuchtmittelserienkreis getrennt arbeitende zweite Versorgungsschaltung 24 dient zur Energieversorgung des Mikrocontrollers 19 sowie des Übertragers 9 und stellt somit sicher, dass bei Fehlern im Leuchtmittelserienkreis, also auch bei einer Trennung desselben, eine differenzierte Meldung an das LON 1 bzw. an die Energieversorgungsleitung 6 abgesetzt wird.

Der Soll-Funktionsbetriebszustand, den der Mikrocontroller 19 vom Übertrager 9 aus dem Versorgungsnetz 6 bzw. dem LON 1, z.B. vom PC 2, als Anweisung erhält, hat der Mikrocontroller 19 über eine Verbindungsleitung 26 zu quittieren; er muss die Anweisung ausführen und hat den wahren Zustand der Funktionsdaten dann über eine Verbindungsleitung 25 und den Übertrager 9 in das LON 1 mit Adresse zu melden.

Das in FIG 2 prinzipiell dargestellte Modulteil 3 dient im Falle der für die erfindungsgemäße Beleuchtungsanlage beispielhaft dargestellten und beschriebenen Flughafenbefeuerungsanlage als Sender/Empfängereinrichtung des Unterflurfeuers 4 und steht über das LON 1, Router 8 sowie die verdrillten Zweidrahtleitungen 5 mit dem als Zentrale fungierenden PC 2, der ein entsprechendes Sende/Empfangsteil und einen Steuerrechner aufweist, in Verbindung.

Der Mikrocontroller 19 des Modulteils 3 ist als One-Chip-Controller ausgebildet. Der Mikrocontroller 19 hat einen EEPROM 27, einen RAM 28, drei CPU 29, 30, 31, einen Clockingund Control-Block 32, einen Applikations-Input/Output-Block 33 und einen Kommunikationsport 34, welcher über den an Hand von FIG 2 beschriebenen Übertrager 9 mit dem LON in Verbindung treten kann.

Der EEPROM 27, der RAM 28, die drei CPU 29, 30, 31, der Applikations-Input/Output-Block und der Kommunikationsport 34 sind mittels eines internen 16-Bit-Adreßbusses 35 und mittels eines internen 8-Bit-Datenbusses 36 aneinander angeschlossen.

Der EEPROM 27, der RAM 28, die drei CPU 29, 30, 31, der Applikations-Input/Output-Block 33, der Kommunikationsport 34 und der Clocking- und Control-Block 32 sind mittels einer Timing- und Steuerleitung 37 miteinander verbunden.

Der EEPROM 27 des Mikrocontrollers 19 weist mindestens 512 Bytes auf. In ihm sind Netzwerkparameter und Applikationsprogramme abspeicherbar.

Die drei CPU 29, 30, 31 des Mikrocontrollers 19 sind jeweils als 8-Bit-CPU ausgebildet. Die erste CPU 29 wird für Applikationsprogramme eingesetzt.

Die beiden anderen CPU 30, 31 des Mikrocontrollers 19 dienen zur LONTALK-Protokollverarbeitung.

Der Applikations-Input/Output-Block 33 des Mikrocontrollers 19 hat elf Input/Output-Anschlüsse 38 bis 45 bzw. 46, 47, 48, von denen acht 38 bis 45 als Daten- und drei 46, 47, 48 als Steuerleitungen einsetzbar sind, wenn der Applikations-Input/Output-Block 33 als Parallelinterface zu einem externen Mikroprozessor eingesetzt wird.

Der Applikations/Input/Output-Block 33 hat ein 16-Bit-Laderegister, eine Zähleinrichtung, einen Zwischenspeicher (Latch), eine Taktquelle (Clock Source), vier 20mA Sink Current-Stifte, vier programmierbare Pull-ups und ggf. weitere Elemente.

Der Kommunikationsport 34 des Mikrocontrollers 19 weist fünf Netzwerkinterfacestifte 49 auf, mittels denen er an ein Grundbandmedium, z.B. eine verdrillte Zweidrahtleitung, oder an einen externen Transceiver anschließbar ist.

Der Clocking- und Control-Block 32 hat einen Kontrollblock 50 und einen Clock/Timer-Block 51; der Mikrocontroller 19 kann des weiteren einen Niedrigspannungsdetektor- und -resetkreis 52 aufweisen.

Der letztere verhindert einen fehlerbehafteten Betrieb oder falsche EEPROM-Werte, falls die angelegte Spannung unterhalb einer Mindestspannung liegt.

Der Kontrollblock 50 des Serviceblocks 32 hat einen Resetund einen Service-Anschluss.

Der Clock/Timer-Block 51 hat einen Anschluss, über den Standardtakteingaben in Höhe von 20 MHz, 10 MHz, 5 MHz, 2,5 MHz, 1,25 MHz und 625 kHz möglich sind.

Es sind zwei programmierbare 16-Bit-Zähler bzw. -Timer vorgesehen.

Bei der dargestellten Ausführungsform des Mikrocontrollers 19 ist dieser an ein externes Speicherinterface 53, welches in der FIG lediglich durch das entsprechende Referenzzeichen dargestellt ist, anschließbar. Bei dieser Ausführungsform weist der RAM 28 des Mikrocontrollers 19 2048 Bytes auf.

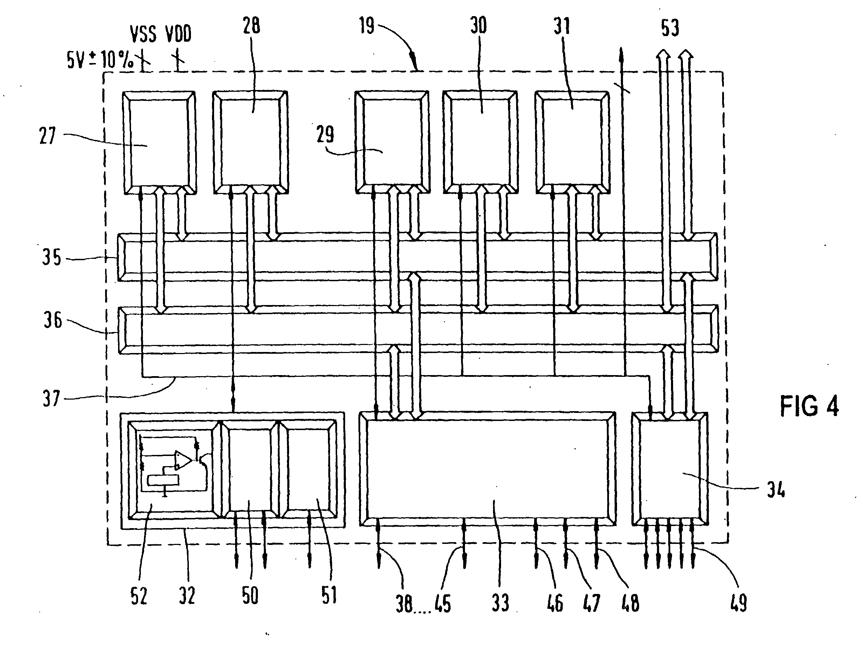

Bei einer weiteren, in FIG 4 nicht dargestellten Ausführungsform des Mikrocontrollers 19 ist kein Anschluss an ein externes Speicherinterface vorgesehen; der RAM 28 des Mikrocontrollers 19 weist 1024 Bytes und ein zusätzlich im Mikrocontroller 19 vorgesehener ROM weist 10240 Bytes auf.

Im Mikrocontroller 19 jedes Modulteils 3 ist eine eindeutige unverlierbar abgelegte Identifikationsnummer vorhanden, mittels der eine Netzwerk-Adresse des jeweiligen Leuchtmittels 10 des Unterflurfeuers 4 verknüpfbar ist; die Identifikationsnummer hat 48 Bit; hierfür sind 6 Bytes des EEPROM 27 einsetzbar.

Der Mikrocontroller 19 verfügt darüber hinaus über einen Servicestift.

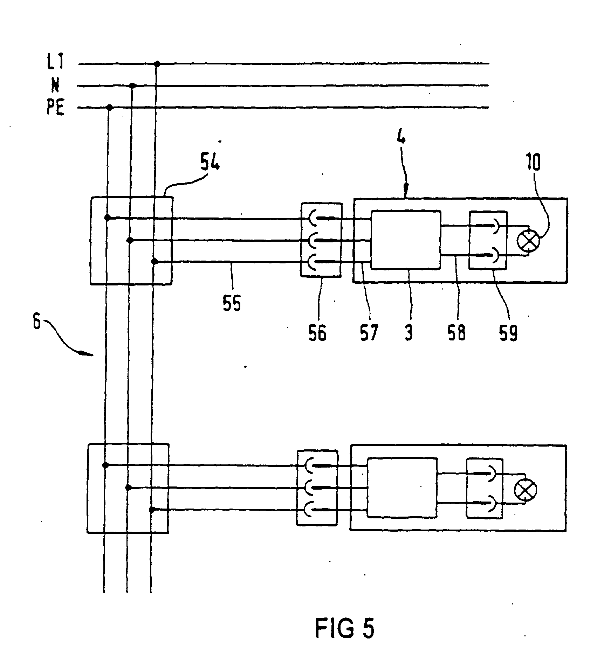

In FIG 5 ist der Anschluss eines Unterflurfeuers 4 an die Energieversorgungsleitung 6 dargestellt. An der Energieversorgungsleitung 6 ist eine Muffe bzw. ein Abzweig 54 vorgesehen, dessen abzweigender Kabelabschnitt 55 über eine als Schukosteckverbindung ausgebildete druckwassergeschützte erste Steckverbindung 56 mit dem Modulteil 3 des Unterflurfeuers 4 verbunden ist. Hierzu weist das Modulteil 3 einen Kabelabschnitt 57 auf, an dessen freiem Ende der modulteilseitige erste Stecker 56 vorgesehen ist.

An seiner dem Leuchtmittel 10 des Unterflurfeuers 4 zugewandten Seite weist das Modulteil 3 ebenfalls einen Kabelabschnitt 58 auf, an dessen freiem Ende eine unterflurfeuerinterne zweite Steckverbindung 59 vorgesehen ist, mittels der das Modulteil 3 an das Leuchtmittel 10 anschließbar ist. Die zweite Steckverbindung 59 ist als zweipolige FAA-Steckverbindung ausgebildet.

Aufgrund der in einfacher Weise lösbaren Steckverbindungen 56, 59, mittels denen das Modulteil 3 einerseits an die Energieversorgungsleitung 6 und andererseits an das Leuchtmittel 10 des Unterflurfeuers 4 angeschlossen ist, ist bei etwaigen Wartungs-, Reparatur- oder Austauscharbeiten in leichter Weise eine Trennung des Modulteils 3 bzw. des Leuchtmittels 10 aus dem Unterflurfeuer 4 möglich.

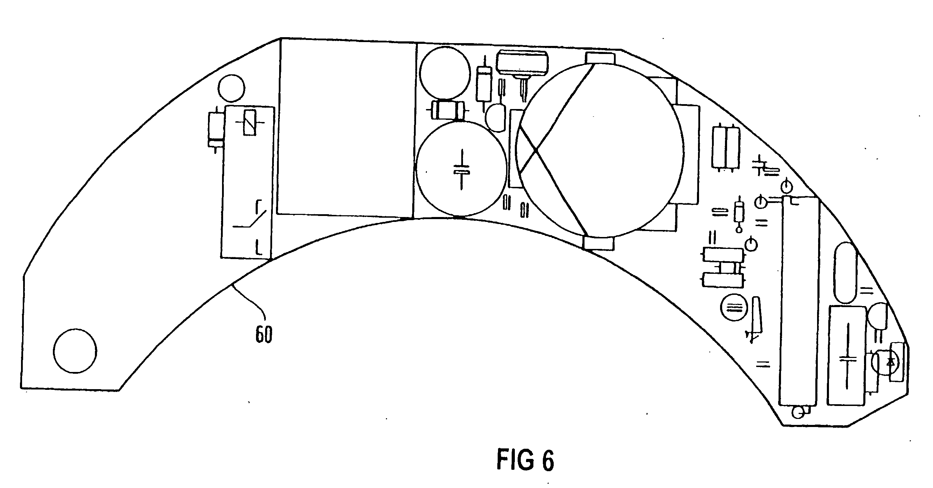

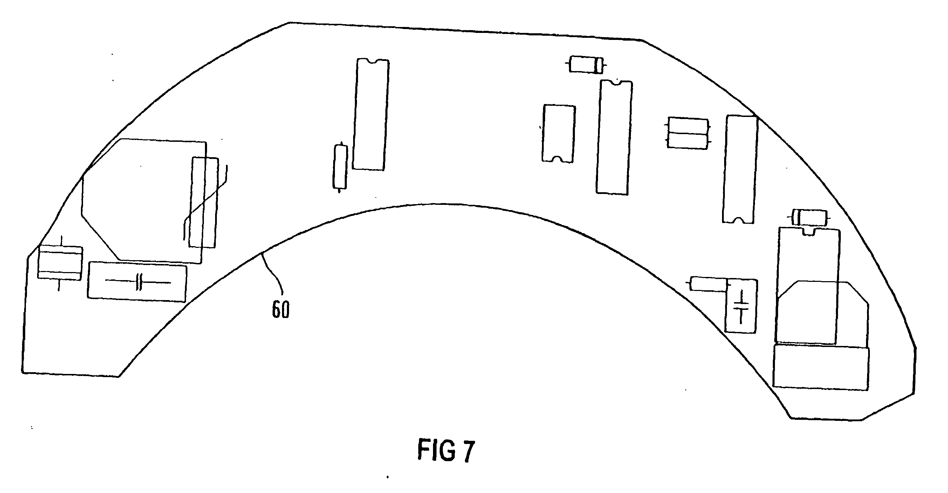

In den FIG 6 und 7 sind eine Draufsicht und eine Unteransicht einer die Funktionselemente des Modulteils 3 aufweisenden Platine 60 dargestellt. Die Platine 60 hat eine gekrümmte Ausgestaltung, so dass sie, wie sich aus den FIG 6 und 7 ergibt, mehr oder weniger sichelförmig ausgebildet ist. Aufgrund dieser sichelförmigen Ausbildung der Platine 60 kann das Modulteil 3 praktisch im gleichen Niveau wie das Leuchtmittel 10 des Unterflurfeuers 4 um das Leuchtmittel 10 herum angeordnet werden. Hierdurch ergibt sich eine insgesamt besonders flache Ausgestaltung des Unterflurfeuers 4.

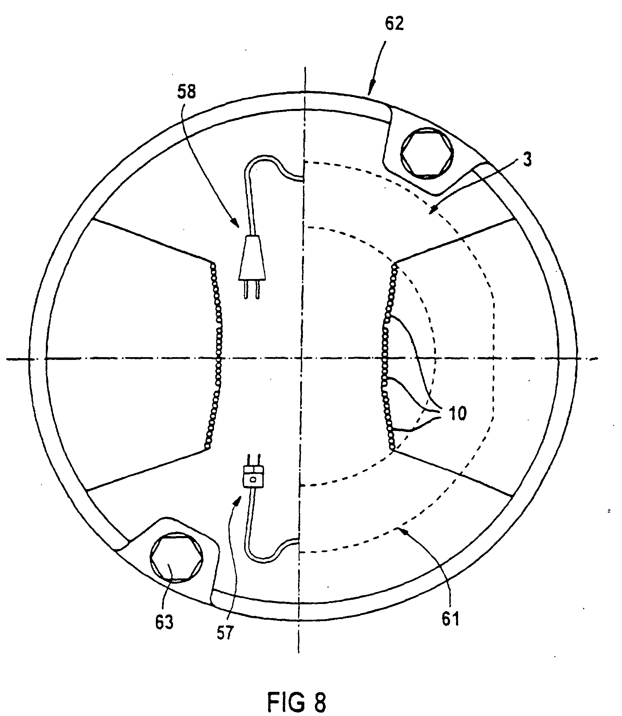

Die Platine 60 mit den auf ihr angeordneten Funktionselementen ist vorteilhafterweise mit einem metallischen Gehäuse 61 versehen, welches in FIG 8 lediglich prinzipiell durch die gestrichelte Linie dargestellt ist. Darüber hinaus kann die Platine 60 mit den an ihr angeordneten Funktionselementen in Kunststoff eingegossen sein, um jedwede Störungen aufgrund von Feuchtigkeit od. dgl. sicher auszuschließen.

Aus dem metallischen Gehäuse 61 der Platine 60 bzw. des Modulteils 3 stehen die Kabelenden 57, 58 vor, mittels denen das Modulteil 3 einerseits an das Leuchtmittel 10 des in FIG 8 dargestellten Unterflurfeuers 4 und andererseits an die in FIG 8 nicht dargestellte Energieversorgungsleitung 6 anschließbar ist.

Das Unterflurfeuer 4 hat ein Gehäuse 62, welches aus seinem Sitz im Untergrund heraushebbar und durch die erste Steckverbindung 56 von der Energieversorgungsleitung 6 trennbar ist.

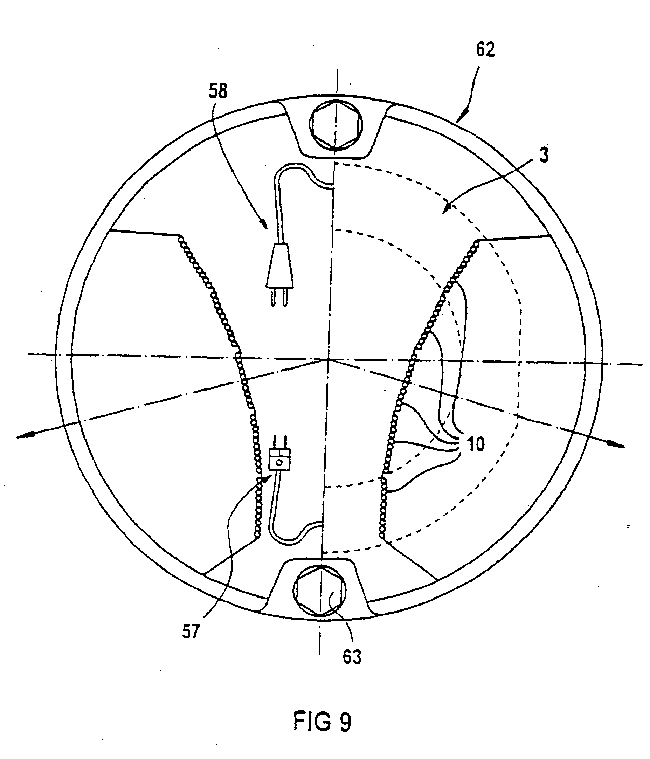

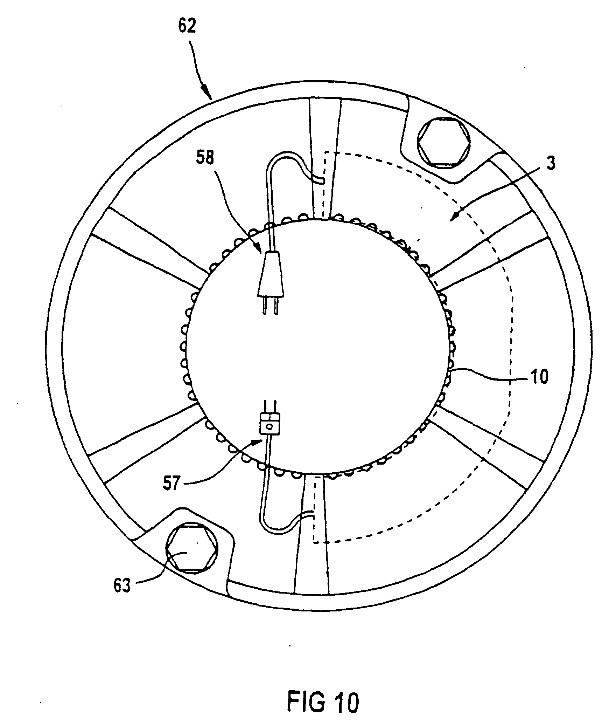

In den FIG 8 bis 10 sind unterschiedliche Ausführungsformen eines Unterflurfeuers 4 der erfindungsgemäßen Beleuchtungsanlage dargestellt. Ihnen gemeinsam ist die Ausgestaltung der Leuchtmittel 10 aus lichtabstrahlenden Dioden (LED). Bei der Ausführungsform gemäß FIG 8 erfolgt die Lichtabstrahlung mittels jeweils in einem Dreier-Cluster angeordneter Leuchtmittel 10 in antiparalleler Richtung. Gemäß FIG 9 erfolgt die Lichtabstrahlung unter Einschluss eines stumpfen Winkels, wohingegen im Falle der Ausführungsform gemäß FIG 10 eine allseitige Lichtabstrahlung vorliegt.

Durch den Einsatz lichtabstrahlender Dioden als Leuchtmittel 10, wobei diese lichtabstrahlenden Dioden in einer bestimmten Anzahl bzw. einem bestimmten Cluster angeordnet sind, kann der Energieverbrauch der Unterflurfeuer 4 erheblich reduziert und deren Lebensdauer erheblich verlängert werden, wodurch sich neben der Energieeinsparung auch eine erhebliche Verlängerung der Wartungsintervalle der Unterflurfeuer 4 ergibt.

Das in FIG 10 dargestellte Unterflurfeuer weist lediglich ein Leuchtmittelcluster 10 auf, welches als Rundumabstrahlleuchte ausgebildet ist. Der Anschluss des Modulteils 3 an die in FIG 10 nicht dargestellte Energieversorgungsleitung 6 erfolgt über das Kabelende 57, der Anschluss des Modulteils 3 an das Leuchtmittel 10 erfolgt über das Kabelende 58. Das Gehäuse 62 des Unterflurfeuers 4 ist, wie bei der Ausführungsform gemäß FIG 8, mittels Schraubverbindungen 63 mit dem Untergrund in einen lösbaren Eingriff bringbar.

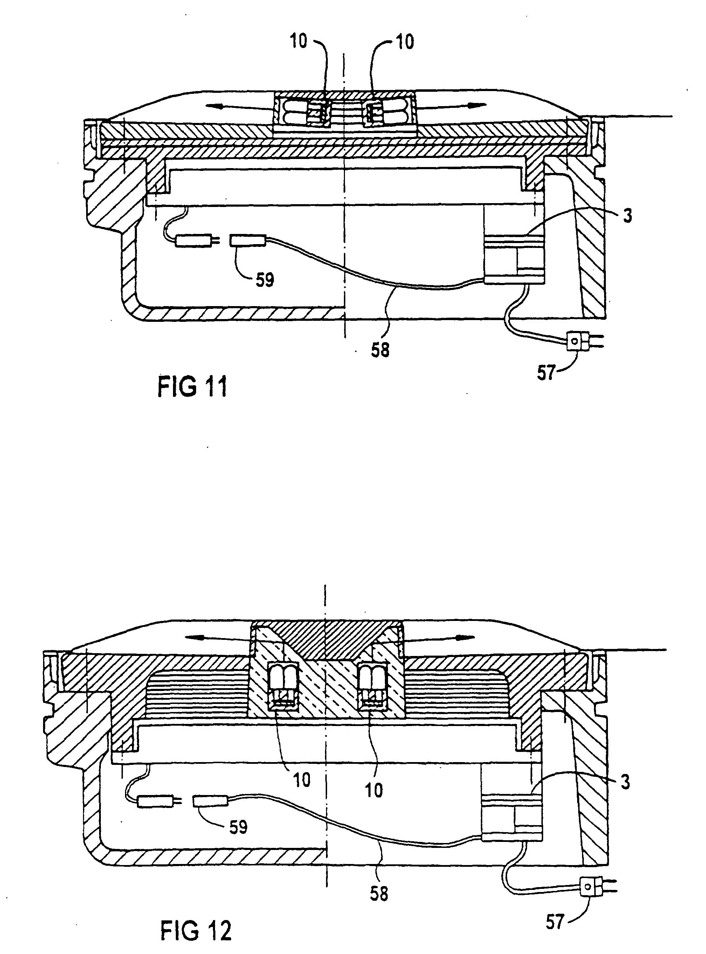

In den FIG 11 und 12 sind unterschiedliche, jeweils durch lichtabstrahlende Dioden (LED) ausgestaltete Leuchtmittel 10 vorgesehen, um jeweils als Leuchtmittel 10 für ein Unterflurfeuer 4 zu dienen. Während im Falle der Ausführungsform gemäß FIG 11 die Abstrahlung der lichtabstrahlenden Dioden bzw. der von diesen gebildeten Leuchtmittel 10 unmittelbar erfolgt, erfolgt die Abstrahlung im Falle der Ausführungsform gemäß FIG 12 über einen Reflektor.

## Patentansprüche

1. Beleuchtungsanlage mit einer Einrichtung zur Überwachung, Steuerung und Regelung ihrer Lichtquellen (4) oder Gruppen von Lichtquellen (4), die als Unterflurfeuer (4) ausgebildet sind und jeweils zumindest eine Leuchtmitteleinheit (10) aufweisen, der eine Sender/Empfängereinrichtung (3) mit einem Mikrocontroller (19) zugeordnet ist, die über eine Energieversorgungsleitung (6) und einen Router (8) an eine Zentrale (2), die ein Sende/Empfangsteil und einen Steuerrechner aufweist, angeschlossen und von der Zentrale (2) mit Steuerungsbefehlen beaufschlagbar sind, wobei der Mikrocontroller (19) jeder Leuchtmitteleinheit (10) Bestandteil einer dezentralen Steuereinrichtung (1) ist, die applikationsspezifische Komponenten, z.B. Schalt-, Überwachungs- und Einstellelemente, aufweist, und wobei jede Sender/Empfängereinrichtung (3) als Modulteil (3) ausgebildet ist, das dem Mikrocontroller (19) und dem Leuchtmittel (10) des Unterflurfeuers (4) vorgeschaltete Schalt- und Überwachungskomponenten (17, 18,21,22,24,9) aufweist, **dadurch gekennzeichnet, dass** die Schalt- und Überwachungskomponenten (17,18,21,22,24, 9) des Modulteils (3) auf einer sichelförmigen Platine (60) angeordnet sind, und dass das Modulteil (3) im gleichen Niveau wie die Leuchtmitteleinheit (10) des Unterflurfeuers (4) neben der bzw. um die Leuchtmitteleinheit (10) herum angeordnet ist.

2. Beleuchtungsanlage nach Anspruch 1, bei der zumindest eine Leuchtmitteleinheit (10) aus einer Anzahl bzw. einem Cluster von lichtabstrahlenden Dioden (LED) ausgebildet ist.

3. Beleuchtungsanlage nach Anspruch 1 oder 2, bei der die dezentrale Steuereinrichtung als LON (1) ausgebildet ist.

4. Beleuchtungsanlage nach einem der Ansprüche 1 bis 3, bei der der Mikrocontroller (19) jeder Sender/Empfängereinrichtung (3) als One-Chip-Controller ausgebildet ist.

5. Beleuchtungsanlage nach einem der Ansprüche 1 bis 4, bei der der Mikrocontroller (19) jeder Sender/Empfängereinrichtung (3) einen EEPROM (27), einen RAM (28), drei CPU (29, 30, 31), einen Clocking- und Control-Block (32) mit einem Controllblock (50) und einem Clock/Timer-Block (51), einen Applikations-Input/Output-Block (33) und einen Kommunikationsport (34) aufweist, wobei der EEPROM (27), der RAM (28), die drei CPU (29,30,31), der Applikations-Input/Output-Block (33) und der Kommunikationsport (34) mittels eines internen Adressbusses (35) und eines internen Datenbusses (36) und der EEPROM (27), der RAM (28), die drei CPU (29,30,31), der Applikations-Input/Output-Block (33), der Kommunikationsport (34) und der Clocking- und Control-Block (32) mittels einer Timing- und Steuerleitung (37) miteinander verbunden sind.

6. Beleuchtungsanlage nach Anspruch 5, bei der der EEPROM (27) des Mikrocontrollers (19) mindestens 512 Bytes aufweist und in ihm Netzwerkparameter und Applikationsprogramme abspeicherbar sind.

7. Beleuchtungsanlage nach Anspruch 5 oder 6, bei der die drei CPU (29,30,31) des Mikrocontrollers (19) jeweils als 8-Bit-CPU ausgebildet sind.

8. Beleuchtungsanlage nach einem der Ansprüche 5 bis 7, bei der eine CPU (29) des Mikrocontrollers (19) für Applikationsprogramme eingesetzt ist.

9. Beleuchtungsanlage nach einem der Ansprüche 5 bis 8, bei der die beiden anderen CPU (30,31) des Mikrocontrollers (19) zur LONTALK-Protokollverarbeitung eingesetzt sind.

10. Beleuchtungsanlage nach einem der Ansprüche 5 bis 9, bei der der Applikations-Input/Output-Block (33) des Mikrocontrollers (19) elf Input/Output-Anschlüsse (38-45,46,47,48) aufweist.

11. Beleuchtungsanlage nach Anspruch 10, bei der der Applikations-Input/Output-Block (33) als Parallelinterface zu einem externen Mikroprozessor mit acht Daten- und drei Steuerleitungen einsetzbar ist.

12. Beleuchtungsanlage nach einem der Ansprüche 5 bis 11, bei der der Applikations-Input/Output-Block (33) des Mikrocontrollers (19) zumindest ein 16-Bit-Laderegister, eine Zähleinrichtung, einen Zwischenspeicher, eine Taktquelle, vier 20 mA-Sink Current-Stifte und vier programmierbare Pull-ups aufweist.

13. Beleuchtungsanlage nach einem der Ansprüche 5 bis 12, bei der der Kommunikationsport (34) des Mikrocontrollers (19) fünf Netzwerkinterfacestifte (49) aufweist, mittels denen er an ein Grundbandmedium oder an einen externen Transceiver anschließbar ist.

14. Beleuchtungsanlage nach einem der Ansprüche 5 bis 13, bei der der Mikrocontroller (19) einen Niedrigspannungsdetektor- und -resetkreis (52) aufweist.

15. Beleuchtungsanlage nach einem der Ansprüche 5 bis 14, bei der der Mikrocontroller (19) an ein externes Speicherinterface (53) anschließbar ist.

16. Beleuchtungsanlage nach einem der Ansprüche 5 bis 15, bei der der RAM (28) des Mikrocontrollers (19) 2048 Bytes aufweist.

17. Beleuchtungsanlage nach einem der Ansprüche 5 bis 14, bei der der Mikrocontroller (19) einen RAM mit 1024 oder 2048 Bytes und einen ROM mit 10240 Bytes aufweist.

18. Beleuchtungsanlage nach einem der Ansprüche 5 bis 17, deren Mikrocontroller (19) jeweils eine eindeutige, unverlierbar abgelegte Identifikationsnummer aufweisen, mittels der der jeweilige Lampenfunktionszustand mit einer Adresse verknüpfbar ist, die vorzugsweise 48 Bit hat und für die 6 Bytes des EEPROM (27) einsetzbar sind.

19. Beleuchtungsanlage nach einem der Ansprüche 5 bis 18, deren Mikrocontroller (19) einen Servicestift aufweist.

20. Beleuchtungsanlage nach einem der Ansprüche 1 bis 19, deren Lichtquellen (4) jeweils eine Leuchtintensitäts-Regelschaltung aufweisen, die einen vorgegebenen Leuchtmittelstrom-Sollwert über ein Pulsweitenmodulationselement einstellt und den sich einstellenden Istwert nachregelt.

21. Beleuchtungsanlage nach Anspruch 20, bei der jede Leuchtintensitäts-Regelschaltung zur Lastabhängigkeits- und Leitungslängenkompensation der Spannung ausgebildet ist.

22. Beleuchtungsanlage nach Anspruch 20 oder 21, deren Lichtquellen (4) jeweils ein Schaltnetzteil aufweist, das als Trennelement einen Ringkernübertrager aufweist, der im Zusammenwirken mit dem Pulsweitenmodulationselement die übertragene Leistung bestimmt.

23. Beleuchtungsanlage nach einem der Ansprüche 1 bis 22, bei der jede Sender/Empfängereinrichtung (3) eine Trennschaltung (17) aufweist, die bei Strömen oberhalb eines vorgebbaren Maximal- und unterhalb eines vorgebbaren Minimalwerts eine schnelle Trennung des ihr nachgeordneten Leuchtmittelkreisteils und der ihr ebenfalls nachgeordneten Leuchtmittel (10) des Unterflurfeuers (4) herbeiführt und nach Störungsbehebung die Trennung aufhebt.

24. Beleuchtungsanlage nach Anspruch 23, bei der jede Sender /Empfängereinrichtung (3) eine Messschaltung (18) aufweist, über die die Trennung und Wiederanschaltung des Leuchtmittels (10) vom Mikrocontroller (19) erfassbar ist.

25. Beleuchtungsanlage nach Anspruch 24, bei deren Sender/Empfängereinrichtungen (3) mittels der Messschaltung (18) alle Leuchtmittelfunktionen erfassbar und in den Mikrocontroller (19) eingebbar sind, wo die Leuchtmittelistwerte mit den Leuchtmittelsollwerten vergleichbar sind.

26. Beleuchtungsanlage nach einem der Ansprüche 2 bis 25, bei der jede Sender/Empfängereinrichtung (3) eine Versorgungsschaltung (21) aufweist, mittels der beim Einsatz von lichtabstrahlenden Dioden (LED) der Leuchtmittelstrom an die Versorgungsspannung anpaßbar ist.

27. Beleuchtungsanlage nach einem der Ansprüche 1 bis 26, bei der jede Sender/Empfängereinrichtung (3) eine Stellerschaltung (22) aufweist, mittels der ein Signal generierbar ist, mittels dem der Istfunktionszustand des Leuchtmittels (10), aber auch ein Leitungsbruch oder Kurzschluss, über die Energieversorgungsleitung (6) in die Zentrale (2) rückmeldbar ist.

28. Beleuchtungsanlage nach einem der Ansprüche 3 bis 27, bei der jede Sender/Empfängereinrichtung (3) eine zweite Versorgungsschaltung (24), die dem Mikrocontroller (19) zugeordnet ist, aufweist, mittels der gewährleistet ist, dass bei Fehlern im Leuchtmittelkreis eine differenzierte Meldung an das LON (1) absetzbar ist.

29. Beleuchtungsanlage nach einem der Ansprüche 1 bis 28, bei der mittels des Mikrocontrollers (19) jeder Sender/Empfängereinrichtung (3) Funktionsdaten über den Zustand einzelner Schaltungen (17,18,21,22,24) der jeweiligen Sender/Empfängereinrichtung (3) an die Zentrale (2) meldbar sind.

30. Beleuchtungsanlage nach einem der Ansprüche 1 bis 29, bei der die einzelnen Unterflurfeuer (4) über eine lösbare Verbindung, insbesondere über eine vorzugsweise als Schukosteckverbindung ausgebildete druckwassergeschützte erste Steckverbindung (56) an einem Kabelabschnitt (55) mit der Energieversorgungsleitung (6) verbunden sind.

31. Beleuchtungsanlage nach einem der Ansprüche 1 bis 30, bei der das Leuchtmittel (10) jedes Unterflurfeuers (4) mittels einer internen Steckverbindung (59), vorzugsweise einer zweipoligen FAA-Steckverbindung, an ihr vorgeschaltete Elemente des Unterflurfeuers (4) angeschlossen ist.

32. Beleuchtungsanlage nach Anspruch 30 oder 31, bei der die einzelnen Unterflurfeuer (4) aus ihrem Sitz im Untergrund heraushebbar und mittels der lösbaren Verbindung (56) von der Energieversorgungsleitung (6) trennbar sind.

33. Beleuchtungsanlage nach einem der Ansprüche 1 bis 32, bei der die Zugehörigkeit einzelner Unterflurfeuer (4;4A) zu vorgebbaren Unterflurfeuergruppen oder Unterflurfeuerketten (11,12,13,14,15,16) über die Energieversorgungsleitung (6) festlegbar ist.

34. Beleuchtungsanlage nach einem der Ansprüche 1 bis 33, bei der die Kommunikation auf der Energieversorgungsleitung (6) im C-Band nach CENELEC durchführbar ist.

35. Beleuchtungsanlage nach einem der Ansprüche 1 bis 34, deren Unterflurfeuer (4) parallel an der Energieversorgungsleitung (6) angeschaltet sind.

36. Beleuchtungsanlage nach einem der Ansprüche 1 bis 35, bei der die Platine (60) an die Form eines Gehäuses (62) des Unterflurfeuers (4) angepasst und stoß- und rüttelfest im Unterflurfeuer (4) befestigt ist.

37. Beleuchtungsanlage nach einem der Ansprüche 31 bis 36, bei der das Modulteil (3) jedes Unterflurfeuers (4) mittels einer bzw. der als druckwassergeschützte erste Steckverbindung (56) ausgebildeten lösbaren Verbindung (56) an die Energieversorgungsleitung (6) und mittels einer bzw. der internen Steckverbindung (59) an das Leuchtmittel (10) des Unterflurfeuers (4) anschließbar ist.

38. Beleuchtungsanlage nach einem der Ansprüche 1 bis 37, bei der das Modulteil (3) jedes Unterflurfeuers (4) ein metallisches geerdetes Gehäuse (61) aufweist.

39. Beleuchtungsanlage nach Anspruch 37 oder 38, bei der das Modulteil (3) wasserdicht eingegossen ist und für zwei bzw. die beiden Steckverbindungen (56,59) jeweils ein Kabelschwanz bzw. Kabelabschnitt (57,58) vorgesehen ist.

## Claims

1. A lighting installation, comprising an arrangement for monitoring and controlling its light sources (4) or groups of light sources (4), which are in the form of blister lights (4) and include in each case at least one lighting means unit (10) with which is associated a transceiver device (3) including a microcontroller (19), which transceiver device (3) is connected via a power supply line (6) and a router (8) to a central station (2) which includes a transceiver part and a control computer, and which transceiver device (3) can be supplied by the central station (2) with control commands, the microcontroller (19) of each lighting means unit (10) being a component of a decentralised control arrangement (1) which includes application-specific components, e.g. switching, monitoring and adjusting elements, and each transceiver device (3) taking the form of a module part (3) which includes switching and monitoring components (17, 18, 21, 22, 24, 9) connected upstream of the microcontroller (19) and of the lighting means (10) of the blister light (4), **characterised in that** the switching and monitoring components (17, 18, 21, 22, 24, 9) of the module part (3) are arranged on a crescent-shaped printed circuit board (60), and **in that** the module part (3) is arranged beside or around the lighting means unit (10) at the same level as the lighting means unit (10) of the blister light (4).

2. Lighting installation according to claim 1, wherein at least one lighting means unit (10) is composed of a plurality or cluster of light-emitting diodes (LEDs).

3. Lighting installation according to claim 1 or 2, wherein the decentralised control arrangement is in the form of a LON (1).

4. Lighting installation according to any one of claims 1 to 3, wherein the microcontroller (19) of each transceiver device (3) is in the form of a one-chip controller.

5. Lighting installation according to any one of claims 1 to 4, wherein the microcontroller (19) of each transceiver device (3) includes an EEPROM (27), a RAM (28), three CPUs (29, 30, 31), a clocking and control block (32) having a control block (50) and a clock/timer block (51), an application input/output block (33) and a communication port (34), the EEPROM (27), the RAM (28), the three CPUs (29, 30, 31), the application input/output block (33) and the communication port (34) being interconnected by means of an internal address bus (35) and an internal data bus (36), and the EEPROM (27), the RAM (28), the three CPUs (29, 30, 31), the application input/output block (33), the communication port (34) and the clocking and control block (32) being interconnected by means of a timing and control line (37).

6. Lighting installation according to claim 5, wherein the EEPROM (27) of the microcontroller (19) has a memory capacity of at least 512 bytes and network parameters and application programs can be stored therein.

7. Lighting installation according to claim 5 or 6, wherein the three CPUs (29, 30, 31) of the microcontroller (19) are in the form of an 8-bit CPU in each case.

8. Lighting installation according to any one of claims 5 to 7, wherein one CPU (29) of the microcontroller (19) is used for application programs.

9. Lighting installation according to any one of claims 5 to 8, wherein the other two CPUs (30, 31) of the microcontroller (19) are used for LONTALK protocol processing.

10. Lighting installation according to any one of claims 5 to 9, wherein the application input/output block (33) of the microcontroller (19) includes eleven input/output connections (38-45, 46, 47, 48).

11. Lighting installation according to claim 10, wherein the application input/output block (33) can be used as a parallel interface to an external microprocessor with eight data lines and three control lines.

12. Lighting installation according to any one of claims 5 to 11, wherein the application input/output block (33) of the microcontroller (19) includes at least one 16-bit load register, a counting device, a buffer memory, a clock source, four 20 mA sink current pins and four programmable pull-ups.

13. Lighting installation according to any one of claims 5 to 12, wherein the communication port (34) of the microcontroller (19) includes five network interface pins (49) by means of which it is connectable to a baseband medium or to an external transceiver.

14. Lighting installation according to any one of claims 5 to 13, wherein the microcontroller (19) includes a low voltage detector and reset circuit (52).

15. Lighting installation according to any one of claims 5 to 14, wherein the microcontroller (19) is connectable to an external memory interface (53).

16. Lighting installation according to any one of claims 5 to 15, wherein the RAM (28) of the microcontroller (19) has a memory capacity of 2048 bytes.

17. Lighting installation according to any one of claims 5 to 14, wherein the microcontroller (19) has a RAM with 1024 or 2048 bytes and a ROM with 10240 bytes.

18. Lighting installation according to any one of claims 5 to 17, each microcontroller (19) of which has an unambiguous, permanently stored identification number by means of which the function state of the respective light can be linked to an address which preferably comprises 48 bits and for which 6 bytes of the EEPROM (27) can be used.

19. Lighting installation according to any one of claims 5 to 18, the microcontroller (19) of which includes a service terminal.

20. Lighting installation according to any one of claims 1 to 19, the light sources (4) of which have in each case a light intensity control circuit which sets a predetermined lighting means current reference value via a pulse width modulation element and readjusts the actual value occurring.

21. Lighting installation according to claim 20, wherein each light intensity control circuit is configured for load-dependent and line-length compensation of voltage.

22. Lighting installation according to claim 20 or 21, the light sources (4) of which include in each case a switching mains power supply unit having as an isolating element a toroidal-core transformer which determines the transmitted power in conjunction with the pulse width modulation element.

23. Lighting installation according to any one of claims 1 to 22, wherein each transceiver device (3) includes an isolating circuit (17) which in the case of currents above a predefinable maximum value and below a predefinable minimum value effects a rapid disconnection of the part of the lighting means circuit connected downstream thereof and of the lighting means (10) of the blister light (4) likewise located downstream thereof and terminates the disconnection after the fault has been corrected.

24. Lighting installation according to claim 23, wherein each transceiver device (3) includes a measuring circuit (18) by means of which the disconnection and reconnection of the lighting means (10) can be detected by the microcontroller (19).

25. Lighting installation according to claim 24, wherein all the lighting means functions of the transceiver devices (3) are detectable by means of the measuring circuit (18) and can be input to the microcontroller (19), where the actual lighting means values can be compared to the reference lighting means values.

26. Lighting installation according to any one of claims 2 to 25, wherein each transceiver device (3) includes a supply circuit (21) by means of which the lighting means current can be adapted to the supply voltage if light-emitting diodes (LEDs) are used.

27. Lighting installation according to any one of claims 1 to 26, wherein each transceiver device (3) includes a regulator circuit (22) whereby a signal can be generated by means of which the actual functional state of.the lighting means (10) together with a line interruption or short circuit can be reported to the central station (2) via the power supply line (6).

28. Lighting installation according to any one of claims 3 to 27, wherein each transceiver device (3) includes a second supply circuit (24) associated with the microcontroller (19), by means of which second supply circuit (24) it is ensured that a differentiated message can be delivered to the LON (1) in case of faults in the lighting means circuit.

29. Lighting installation according to any one of claims 1 to 28, wherein function data on the state of individual circuits (17, 18, 21, 22, 24) of the respective transceiver device (3) can be reported to the central station (2) by means of the microcontroller (19) of each transceiver device (3).

30. Lighting installation according to any one of claims 1 to 29, wherein the individual blister lights (4) are connected to the power supply line (6) via a detachable connection, in particular via a cable section (55) having a first plug connection (56) preferably in the form of a grounded safety plug connection which is protected against pressurised water.

31. Lighting installation according to any one of claims 1 to 30, wherein the lighting means (10) of each blister light (4) are connected to elements of the blister light (4) connected upstream thereof by means of an internal plug connection (59), preferably a two-pole FAA plug connection.

32. Lighting installation according to claim 30 or 31, wherein the individual blister lights (4) are removable from their receptacles below ground and can be separated from the power supply line (6) by means of the detachable connection (56).

33. Lighting installation according to any one of claims 1 to 32, wherein the association of individual blister lights (4; 4A) with predefinable groups or chains of blister lights (11, 12, 13, 14, 15, 16) can be determined via the power supply line (6).

34. Lighting installation according to any one of claims 1 to 33, wherein the communication on the power supply line (6) can be executed in the C-band in accordance with the CENELEC protocol.

35. Lighting installation according to any one of claims 1 to 34, the blister lights (4) of which are connected in parallel to the power supply line (6).

36. Lighting installation according to any one of claims 1 to 35, wherein the printed circuit board (60) is adapted to the shape of a housing (62) of the blister light (4) and is fixed in the blister light (4) in a shockproof and shakeproof manner.

37. Lighting installation according to any one of claims 31 to 36, wherein the module part (3) of each blister light (4) is connectable to the power supply line (6)) by means of a/the detachable connection (56) in the form of a first plug connection (56) which is protected against pressurised water, and is connectable to the lighting means (10) of the blister light (4) by means of an/the internal plug connection (59).

38. Lighting installation according to any one of claims 1 to 37, wherein the module part (3) of each blister light (4) has a metal, grounded housing (61).

39. Lighting installation according to claim 37 or 38, wherein the module part (3) is embedded in a watertight manner and an unconnected cable end or cable section (57, 58) is provided for two or both plug connections (56, 59).

## Revendications

1. Système d'éclairage comportant un dispositif de surveillance, de commande et de régulation de ses sources lumineuses (4) ou groupes de sources lumineuses (4) qui sont conçus comme des plot(s) lumineux encastré(s) (4) et qui comportent respectivement au moins une unité éclairante (10) à laquelle est associé un dispositif émetteur / récepteur (3) contenant un microcontrôleur (19), lesquels dispositifs émetteurs / récepteurs sont raccordés par l'intermédiaire d'une ligne d'alimentation en énergie (6) et d'un dispositif d'acheminement (8) à un central (2) contenant une partie d'émission / réception et un ordinateur de commande et reçoivent du central (2) des instructions de commande, le microcontrôleur (19) de chaque unité éclairante (10) faisant partie d'un dispositif de commande décentralisé (1) qui comporte des composants spécifiques à l'application tels des éléments de commutation, de surveillance et de réglage, et chaque dispositif d'émission / réception (3) étant conçu comme une partie modulaire (3) qui comporte des composants de commutation et de surveillance (17, 18, 21, 22, 24, 9) placés du côté amont du microcontrôleur (19) et du moyen éclairant (10) de l'éclairage affleurant (4), **caractérisé par le fait que** les composants de commutation et de surveillance (17, 18, 21, 22, 24, 9) de la partie modulaire (3) sont placés sur une plaque (60) en forme de faucille et que la partie modulaire (3) est placée au même niveau que l'unité éclairante (10) de l'éclairage affleurant (4) à côté ou autour de l'unité éclairante (10).

2. Système d'éclairage selon la revendication 1, dans lequel au moins une unité éclairante (10) est constituée d'un certain nombre ou groupe de diodes électroluminescentes (LED).

3. Système d'éclairage selon la revendication 1 ou 2, dans lequel le dispositif de commande décentralisé est conçu comme un LON (1).

4. Système d'éclairage selon l'une des revendications 1 à 3, dans lequel le microcontrôleur (19) de chaque dispositif émetteur / récepteur (3) est conçu comme un One-Chip-Controller.

5. Système d'éclairage selon l'une des revendications 1 à 4, dans lequel le microcontrôleur (19) de chaque dispositif émetteur/ récepteur (3) comporte une EEPROM (27), une RAM (28), trois CPU (29, 30, 31), un bloc d'horloge et de contrôle (32) avec un bloc de contrôle (50) et avec un bloc d'horloge et de temporisation (51), un bloc d'entrée / sortie d'application (33) et un port de communication (34), l'EEPROM (27), la RAM (28), les trois CPU (29, 30, 31), le bloc d'entrée/sortie d'application (33) et le port de communication (34) étant raccordés les uns aux autres au moyen d'un bus d'adresses interne (35) et d'un bus de données interne (36) et l'EEPROM (27), la RAM (28), les trois CPU (29, 30, 31), le bloc d'entrée / sortie d'application (33), le port de communication (34) et le bloc d'horloge et de contrôle (32) étant reliés entre eux au moyen d'une ligne de temporisation et de commande (37).

6. Système d'éclairage selon la revendication 5, dans lequel l'EEPROM (27) du microcontrôleur (19) comporte au moins 512 octets et peut mémoriser des paramètres de réseau et des programmes d'application.

7. Système d'éclairage selon la revendication 5 ou 6, dans lequel les trois CPU (29, 30, 31) du microcontrôleur (19) sont conçues à chaque fois comme des CPU à 8 bits.

8. Système d'éclairage selon l'une des revendications 5 à 7, dans lequel une CPU (29) du microcontrôleur (19) est utilisée pour des programmes d'application.

9. Système d'éclairage selon l'une des revendications 5 à 8, dans lequel les deux autres CPU (30, 31) du microcontrôleur (19) sont utilisées pour le traitement du protocole LONTALK.

10. Système d'éclairage selon l'une des revendications 5 à 9, dans lequel le bloc d'entrée / sortie d'application (33) du microcontrôleur (19) comporte onze bornes d'entrée / sortie (38 à 45, 46, 47, 48).

11. Système d'éclairage selon la revendication 10, dans lequel le bloc d'entrée / sortie d'application (33) est utilisable comme interface parallèle vers un multiprocesseur externe avec huit lignes de données et trois lignes de commande.

12. Système d'éclairage selon l'une des revendications 5 à 11, dans lequel le bloc d'entrée/sortie d'application (33) du microcontrôleur (19) comporte au moins un registre de chargement à 16 bits, un dispositif compteur, une mémoire temporaire, une source d'horloge, quatre broches 20 mA Sink Current et quatre éléments Pull-ups programmables.

13. Système d'éclairage selon l'une des revendications 5 à 12, dans lequel le port de communication (34) du microcontrôleur (19) comporte cinq broches d'interface réseau (49) au moyen desquelles il peut être raccordé à un moyen de transmission en bande de base ou à un émetteur / récepteur externe.

14. Système d'éclairage selon l'une des revendications 5 à 13, dans lequel le microcontrôleur (19) comporte un circuit de détection et de remise à l'état initial de basse tension (52).

15. Système d'éclairage selon l'une des revendications 5 à 14, dans lequel le microcontrôleur (19) peut être raccordé à une interface mémoire externe (53).

16. Système d'éclairage selon l'une des revendications 5 à 15, dans lequel la RAM (28) du microcontrôleur (19) comporte 2 048 octets.

17. Système d'éclairage selon l'une des revendications 5 à 14, dans lequel le microcontrôleur (19) comporte une RAM avec 1 024 ou 2 048 octets et une ROM avec 10 240 octets.

18. Système d'éclairage selon l'une des revendications 5 à 17 dont les microcontrôleurs (19) comportent chacun un numéro d'identification unique qui est mémorisé de manière à ne pouvoir être perdu et au moyen duquel l'état de fonctionnement de lampe respectif peut être combiné avec une adresse, ledit numéro ayant de préférence 48 bits et 6 octets de l'EEPROM (27) pouvant être utilisés à cet effet.

19. Système d'éclairage selon l'une des revendications 5 à 18 dont les microcontrôleurs (19) comportent une broche de service.

20. Système d'éclairage selon l'une des revendications 1 à 19 dont les sources lumineuses (4) comportent chacune un circuit régulateur d'intensité lumineuse qui règle une valeur de consigne prédéterminée pour le courant de moyen éclairant par l'intermédiaire d'un élément modulateur de largeur d'impulsion et qui ajuste la valeur réelle s'installant.

21. Système d'éclairage selon la revendication 20, dans lequel chaque circuit régulateur d'intensité lumineuse est conçu pour la compensation de la tension en raison de la charge et de la longueur de ligne.

22. Système d'éclairage selon la revendication 20 ou 21 dont les sources lumineuses (4) comportent chacune un bloc d'alimentation à découpage comportant comme élément séparateur un transformateur toroïdal qui détermine la puissance transmise en coopérant avec l'élément modulateur de largeur d'impulsion.

23. Système d'éclairage selon l'une des revendications 1 à 22, dans lequel chaque dispositif émetteur / récepteur (3) comporte un circuit séparateur (17) qui provoque en cas de courants supérieurs à une valeur maximale pouvant être prescrite et en cas de courants inférieurs à une valeur minimale pouvant être prescrite une coupure rapide entre la partie de circuit de moyen éclairant placée du côté aval et le moyen éclairant (10), également placé du côté aval, de l'éclairage affleurant (4) et qui supprime la coupure après la suppression des perturbations.

24. Système d'éclairage selon la revendication 23, dans lequel chaque dispositif émetteur / récepteur (3) comporte un circuit de mesure (18) par l'intermédiaire duquel la coupure et le rebranchement du moyen éclairant (10) peuvent être détectés par le microcontrôleur (19).

25. Système d'éclairage selon la revendication 24, dans les dispositifs émetteurs / récepteurs (3) desquels tous les états de fonctionnement du moyen éclairant peuvent être détectés au moyen du circuit de mesure (18) et être entrés dans le microcontrôleur (19) où les valeurs réelles du moyen éclairant peuvent être comparées aux valeurs de consigne du moyen éclairant.

26. Système d'éclairage selon l'une des revendications 2 à 25, dans lequel chaque dispositif émetteur / récepteur (3) comporte un circuit d'alimentation (21) au moyen duquel, lors de l'utilisation de diodes électroluminescentes (LED), le courant du moyen éclairant est adaptable à la tension d'alimentation.

27. Système d'éclairage selon l'une des revendications 1 à 26, dans lequel chaque dispositif émetteur / récepteur (3) comporte un circuit régleur (22) au moyen duquel peut être produit un signal permettant de signaler en retour au central (2), via la ligne d'alimentation en énergie (6), l'état de fonctionnement réel du moyen éclairant (10) mais aussi une rupture de ligne ou un court-circuit.

28. Système d'éclairage selon l'une des revendications 3 à 27, dans lequel chaque dispositif émetteur / récepteur (3) comporte un deuxième circuit d'alimentation (24) qui est associé au microcontrôleur (19) et qui garantit que, en cas d'erreurs dans le circuit du moyen éclairant, une signalisation différenciée peut être envoyée au LON (1).

29. Système d'éclairage selon l'une des revendications 1 à 28, dans lequel, au moyen du microcontrôleur (19) de chaque dispositif émetteur / récepteur (3), des données fonctionnelles concernant l'état de différents circuits (17, 18, 21, 22, 24) du dispositif émetteur / récepteur respectif (3) peuvent être signalées au central (2).

30. Système d'éclairage selon l'une des revendications 1 à 29, dans lequel les différents plot(s) lumineux encastré(s) (4) sont reliés par l'intermédiaire d'une liaison amovible, notamment par l'intermédiaire d'un premier connecteur à fiches (56) protégé contre l'eau d'infiltration et conçu de préférence comme un connecteur de protection, par un tronçon de câble (55) à la ligne d'alimentation en énergie (6).

31. Système d'éclairage selon l'une des revendications 1 à 30, dans lequel le moyen éclairant (10) de chaque éclairage affleurant (4) est raccordé par un connecteur à fiches interne (59), de préférence un connecteur FAA bipolaire, à des éléments de l'éclairage affleurant (4) qui sont branchés du côté amont.

32. Système d'éclairage selon la revendication 30 ou 31, dans lequel les différents plot(s) lumineux encastré(s) (4) peuvent être sortis de leur logement dans le sous-sol et peuvent être séparés de la ligne d'alimentation en énergie (6) au moyen de la liaison amovible (56).

33. Système d'éclairage selon l'une des revendications 1 à 32, dans lequel l'appartenance de différents plot(s) lumineux encastré(s) (4 ; 4A) à des groupes ou chaînes de plot(s) lumineux encastré(s) pouvant être prescrits (11, 12, 13, 14, 15, 16) peut être spécifiée par l'intermédiaire de la ligne d'alimentation en énergie (6).

34. Système d'éclairage selon l'une des revendications 1 à 33, dans lequel la communication sur la ligne d'alimentation en énergie (6) peut s'effectuer dans la bande C selon CENELEC.

35. Système d'éclairage selon l'une des revendications 1 à 34 dont les plot(s) lumineux encastré(s) (4) sont branchés en parallèle sur la ligne d'alimentation en énergie (6).

36. Système d'éclairage selon l'une des revendications 1 à 35, dans lequel la plaque (60) est adaptée à la forme d'un boîtier (62) de l'éclairage affleurant (4) et est fixée dans l'éclairage affleurant (4) de manière à résister aux chocs et aux secousses.

37. Système d'éclairage selon l'une des revendications 31 à 36, dans lequel la partie modulaire (3) de chaque éclairage affleurant (4) peut être raccordée à la ligne d'alimentation en énergie (6) par l'intermédiaire d'une ou de la liaison amovible (56) conçue comme un premier connecteur à fiches protégé contre l'eau d'infiltration et au moyen éclairant (10) de l'éclairage affleurant (4) par l'intermédiaire d'un ou du connecteur à fiches interne (59).

38. Système d'éclairage selon l'une des revendications 1 à 37, dans lequel la partie modulaire (3) de chaque éclairage affleurant (4) comporte un boîtier (61) métallique mis à la terre.

39. Système d'éclairage selon la revendication 37 ou 38, dans lequel la partie modulaire (3) est scellée de manière à être étanche à l'eau et un tronçon de câble (57, 58) est prévu pour chacun des deux connecteurs (56, 59).
